# EUROPÄISCHE PATENTSCHRIFT

(11) **EP 3 666 514 B1**
(45) Veröffentlichungstag und Bekanntmachung des Hinweises auf die Patenterteilung: **02.04.2025**
(21) Anmeldenummer: 18212021.2
(22) Anmeldetag: 12.12.2018
(51) Int. Cl.: B44B 5/00, B44B 5/02, B30B 15/06

(54) **PRESSBLECH ZUM ERZEUGEN TIEFER STRUKTUREN**
PRESSED SHEET FOR FORMING DEEP STRUCTURES
TÔLE EMBOUTI PERMETTANT DE PRODUIRE DES STRUCTURES PLUS PROFONDES

(43) Veröffentlichungstag der Anmeldung: 17.06.2020
(73) Patentinhaber: Flooring Technologies Ltd., Kalkara SCM1001 (MT)
(72) Erfinder: KALWA, Norbert, 32805 Horn-Bad Meinberg (DE)
(74) Vertreter: Gramm, Lins & Partner Patent- und Rechtsanwälte PartGmbB

(56) Entgegenhaltungen:
- EP-A2- 0 292 738
- EP-A2- 2 380 746
- DE-A1- 102010 031 421
- DE-A1- 102011 051 266
- DE-U1- 202012 004 375
- US-A1- 2010 247 943

## Beschreibung

Die Erfindung betrifft ein Pressblech zum Erzeugen tiefer Strukturen in plattenförmigen Produkten, wie beispielsweise in Holzwerkstoffplatten oder aus harzbeschichteten Papieren (Kraftpapieren) bestehenden Laminaten.

Ein solches Pressblech ist beispielsweise aus der DE 10 2014 010 747 B4 bekannt.

In vielen Industriezweigen werden zur Herstellung von strukturierten Oberflächen strukturierte Pressbleche als Matrize verwendet. Die Pressbleche sind üblicherweise Stahlbleche in einer Stärke von wenigen Millimetern (überwiegend 5 mm), die verchromt oder hochglanzpoliert sind. In der Holzwerkstoffindustrie werden solche Pressbleche in sogenannten Kurztaktpressen eingesetzt. In diesen Kurztaktpressen werden kunstharzimprägnierte Dekorpapiere unter Druck und Temperatur auf Holzwerkstoffplatten aufgepresst. Bei dem Pressprozess schmilzt das Kunstharz auf und vernetzt nach, wobei es teilweise auch in die Holzwerkstoffplatte eindringt und damit eine gute Verankerung der kunstharzimprägnierten Papiere auf der Holzwerkstoffplatte erzeugt wird. Mit dem aus der DE 10 2014 010 747 B4 bekannten Pressblech kann bis zur Oberseite der Holzwerkstoffplatte durchdringend geprägt werden. Ein Einprägen von Strukturen in die Holzwerkstoffplatte hinein ist jedoch nicht möglich.

Auch ist es bekannt, kunstharzimprägnierte Dekorpapiere mit Phenolharz imprägnierten Kraftpapieren zu Verpressen. Die so hergestellten Laminate oder Compact-Platten werden dann auf Trägerlatten aufkaschiert und finden als Arbeitsplatten oder Trennwände usw. Verwendung.

Aus der EP 2 127 901 B1 ist ein Verfahren zur Herstellung von Fußbodenpaneelen bekannt, für das eine Kurztaktpresse Verwendung findet, in der das Pressblech im Bereich mit einer Zone niedrigem Drucks für die nachträgliche Weiterverarbeitung des Fußbodenpaneels zwei dicht nebeneinander angeordnete Stege und zusätzlich einzeln angeordnete Stege für das Simulieren von Fugenfüllungslinien aufweist. Die Bereiche mit den zwei Stegen bzw. die einzeln angeordneten Stempel wiederholen sich in gewünschten Abständen. Die eingeprägten Vertiefungen können verschiedene Formen aufweisen. Die Platten können nach dem Prägen in einzelne Dielen bzw. Fliesen aufgeteilt werden. Sie können aber auch immer zu mehreren zusammenhängend weiterverarbeitet werden, sodass für die Prägung der zusammenhängenden Teile nur eine schmale kleinflächige Zone hohen Drucks notwendig ist. Die gesamte zusammenhänge Dielen- bzw. Fliesenfläche wird in diesem Falle als Zone geringen Drucks bezeichnet.

Die Strukturen auf den Pressblechen werden üblicherweise durch Ätzen hergestellt. Dabei werden in einem komplexen Prozess auf die Stahlrohlinge säurebeständige Lacke aufgedruckt, die in ihrem Druckbild der späteren Struktur entsprechen. An den Stellen, an denen kein Lack aufgebracht wird, wird im anschließenden Ätzprozess Material abgetragen. An den Stellen, an denen sich der Lack befindet nicht. Problematisch ist dabei, dass man mit einem einzigen Ätzprozess nicht beliebige Ätztiefen erreichen kann. Das bedeutet, dass man für tiefe Strukturen sehr viele Ätzzyklen durchlaufen muss. Dies macht den Herstellungsprozess, wie er beispielsweise in der EP 2 186 650 B1 beschrieben ist, langwierig und teuer.

Ab einer bestimmten Strukturtiefe kann die Ätztechnik nicht mehr eingesetzt werden, da der beschriebene Lackauftrag in immer tieferen Strukturen nicht mehr präzise aufgetragen werden kann. Üblicherweise liegen tiefe Strukturen, die über die Ätztechnologie erzeugt werden, bei ca. 200 µm.

Die EP 2 991 293 B1 offenbart eine Kurztaktpresse, bei der das Pressblech am Rand mit einem rahmenförmigen Vorsprung versehen ist, mit dem ein Verdrängen des beim Pressen aufschmelzenden Harzes der Papiere am Rand des Pressblechs vermieden wird, wodurch die Verschleißneigung drastisch reduziert werden soll. Beim Verpressen kommt es zu einem Fließen des Harzes und ohne den Vorsprung zu einer Verdrängung des aufgeschmolzenen Harzes zur Seite hin. Wenn die harzimprägnierten Papiere auch Hartstoffe beispielsweise Korund, enthalten, kommt es durch die Ausdehnung des Pressblechs beim Pressen zu Relativbewegung zwischen den Korundkörnern und dem Pressblech, was zu einem erhöhten Verschleiß führt. Hiervon ausgehend, liegt der Erfindung die Aufgabe zugrunde, ein Pressblech herzustellen, mit dem besonders tiefe Strukturen geprägt werden können, insbesondere in Holzwerkstoffplatten, die mit duroplastischen, dekorativen Imprägnaten beschichtet werden sollen. Dabei sollen aufwendige Ätzprozesse unterbleiben. Für spezielle Anwendungen soll eine einfach Herstellungsmöglichkeit für das Pressblech geschaffen werden.

Die DE 10 2010 031 421 A1 offenbart eine Vorrichtung zum Laminieren eines mehrlagigen Dokumentes mit zwei Laminierplatten, zwischen denen das Dokument anordenbar ist. Die Laminierplatten sind einstückig an ihrer Rückseite mit Stegen versehen, die zur Führung in einer Labyrinthplatte in ähnlicher Weise wie ein Kolben in einem Zylinder eines Verbrennungsmotors dienen.

In der DE 20 2012 004 375 U1 ist eine Werkstoffplatte mit zumindest einer strukturierten Oberfläche mit erhabenen und tief liegenden Bereichen offenbart, die durch ein Pressblech oder Endlosband geprägt wurden, das vollflächig einen ersten Glanzgrad aufweist und in weiteren Arbeitsschritten in mehreren ausgewählten Bereichen weitere unterschiedliche Glanzgrade erhalten hat.

Aus der DE 10 2011 051 266 A1 ist ein Verfahren zur Herstellung eines Presskörpers mit wenigstens einem strukturgebenden Oberflächenbereich zur Fertigung eines Laminats bekannt. Der strukturgebende Oberflächenbereich weist einzelne Erhebungen auf die auf einen Basisträger aufgebracht sind. Die Erhebungen werden aus einem formlosen Werkstoff gebildet, der mittels eines digitalen Druckverfahrens aufgebracht ist. Je nach Anforderungen sind die Erhebungen gehärtet.

US 2010/247943 A1 offenbart ein Pressblech gemäss dem Oberbegriff des Anspruchs 1.

Zur Lösung dieser Aufgabe zeichnet sich das Pressblech durch die Merkmale des Anspruchs 1 aus.

Die Stege können form- und/oder stoffschlüssig mit dem Grundkörper verbunden sein
Durch diese Ausgestaltung der in den Grundkörper eingesetzten Profilierung können die Pressbleche rasch umgearbeitet werden, weil die Stege immer wieder durch Fräsen entfernt und durch neue Elemente ersetzt werden können.

Durch die gegenüber dem Grundkörper höhere Wärmeleitfähigkeit der Stege wird der in der Holzwerkstoffplatte oder dem Laminat zu verformende Bereich schneller durchgewärmt und elastifiziert. Der Prägeprozess kann damit deutlich materialschonender gestaltet werden, da eine zu starke Erwärmung des plattenförmigen Produktes vermieden wird. Werden die tiefen Strukturen in eine Holzwerkstoffplatte geprägt, wird dadurch eine zu starke Erwärmung des Holzwerkstoffs und ein Austrocknen bzw. Zerstören des Leims, mit dem die Holzfasern oder Holzspäne versehen sind, vermieden.

Um die Stege in den Grundkörper einzusetzen, werden vorzugsweise nutenförmige Vertiefungen in den Grundkörper gefräst, in die die Stege eingeklebt, eingelötet oder eingeschweißt werden können.

Die Stege können aus einer Stahl, einer Aluminium-, einer Messing- oder einer Kupferlegierung bestehen. Auch Reinmetalle, die gegebenenfalls auch Legierungsbestandteile im Prozentbereich enthalten können, können zum Einsatz kommen. Insbesondere Kupfer kann als Reinmetall Verwendung finden.

Vorzugsweise sind der Grundkörper und die Stege verchromt, und insbesondere vorzugsweise sind die von dem Grundkörper wegweisenden Kanten der Stege abgerundet. Die Stege können eine Höhe von 0,2 bis zum 5 mm aufweisen. Vorzugsweise beträgt die Höhe 1 bis 3 mm, insbesondere 2 mm.

Sowohl die Oberseite der Stege als auch die Oberseite des Grundkörpers können eine Strukturierung aufweisen, mit der in die Oberfläche beispielsweise eine zu dem Dekor korrespondierende Struktur eingeprägt werden kann. Zu einem Holzdekor würde die Strukturierung dann eine hierzu kongruente Holzmaserung darstellen, um eine so genannte "Synchronpore" zu erzeugen.

Die Strukturierung des Grundkörpers kann von der Strukturierung der Stege abweichen, wenn eine besondere optische Gestaltung der Oberseite des fertigen Produktes gewünscht ist.

Mit Hilfe einer Zeichnung sollen Ausführungsbeispiele der Erfindung nachfolgend näher beschrieben werden. Es zeigen:
- Figur 1 -: die perspektivische Darstellung eines ersten erfindungsgemäß ausgestalteten Pressblechs;
- Figur 2 -: den Schnitt entlang der Linie II-II nach Figur 1;
- Figur 3 -: die perspektivische Darstellung eines zweiten erfindungsgemäß ausgestalteten Pressblechs;
- Figur 4 -: die schematische Ansicht eines in ein Pressblech eingesetzten Steges in Teildarstellung.

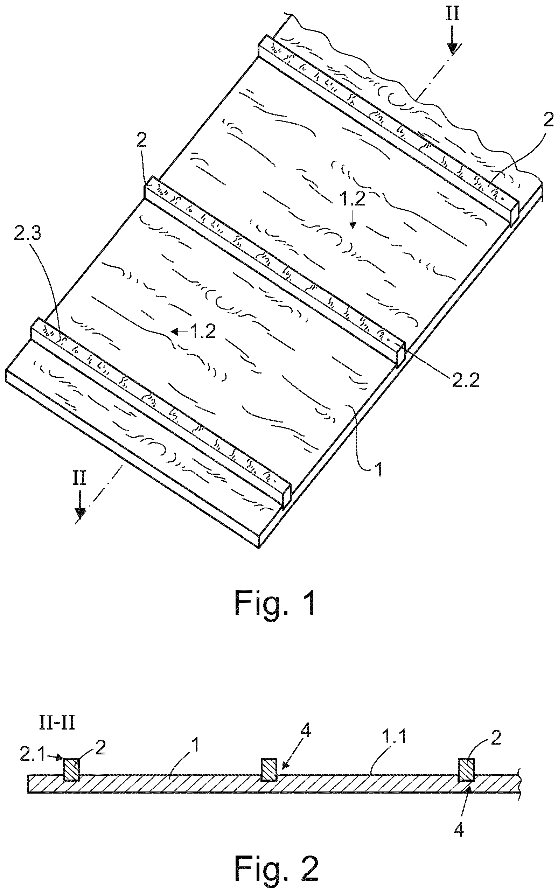

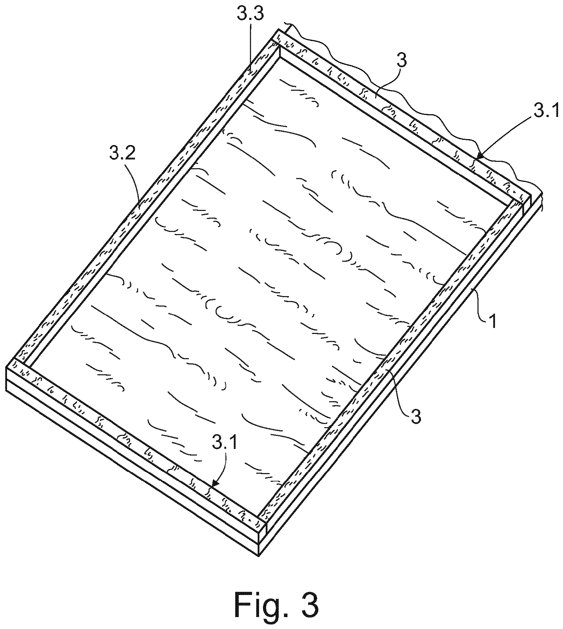

Das Pressblech besteht aus einem Grundkörper 1, der beispielsweise ein Stahlblech mit einer Dicke von 5 mm ist. In dieses Stahlblech sind parallel zueinander beabstandete Vertiefungen 4 eingebracht, die durch Ätzen oder Fräsen erzeugt worden sein können. Anstelle von nutenförmigen Vertiefungen 4 können auch Ausnehmungen (Löcher) vorgesehen sein, die dann aber nicht über die volle Breite des Grundkörpers 1 reichen können. In die Vertiefungen 4 sind streifenförmige Stege 2 (vgl. Figur 1) oder rahmenförmige Stege 3 (vgl. Figur 3) eingesetzt. Die Stege 2, 3 bestehen aus einem Material, das eine höhere Wärmeleitfähigkeit als das Material des Grundkörpers 1 besitzt. Vorzugsweise bestehen sie aus einer Aluminium-, Messing- oder Kupferlegierung. Auch kann eine Stahllegierung verwendet werden. Die Stege 2 sind mit dem Grundkörper 1 stoffschlüssig verbunden, indem sie beispielsweise mit dem Grundkörper 1 verschweißt oder verlötet sind. Auch können die Stege 2 in die Vertiefungen oder Ausnehmungen 4 eingeklebt werden. Auf der Oberseite 1.1 ist der Grundkörper 1 mit einer Strukturierung 1.2 versehen, mit der eine zu dem Dekor der Holzwerkstoffplatte oder des Laminats passende Struktur in die Oberseite des plattenförmigen Produktes eingeprägt werden kann. Auch die Oberseite 2.2 bzw. 3.2 der Stege 2, 3 kann mit einer Strukturierung 2.3, 3.3 versehen sein. Die Strukturierung 2.3, 3.3 der Stege 2, 3 kann von der Strukturierung 1.2 des Grundkörpers 1 abweichen.

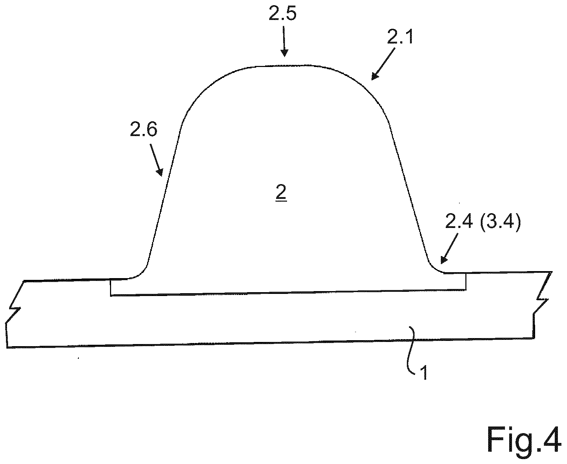

Die vom Grundkörper 1 wegweisenden Kanten 2.1, 3.1 der Stege 2, 3 können abgerundet sein, um das Einprägen der Struktur zu vereinfachen. Wie Figur 4 zeigt, können die Übergänge 2.4 am Steg 2 zum Pressblech 1 hin gerundet sein, sodass sich im Übergangsbereich vom Pressblech 1 zum Steg 2 keine Höhendifferenz einstellt. Diese Verrundung kann auch am Rahmen 3 vorgesehen werden (nicht gezeigt).

Die Breite des oberen Bereichs 2.5 des Steges 2 ist variabel. Diese Breite hängt davon ab, wie breit die gewünschte Vertiefung im Produkt sein soll. Diese Breite bestimmt sich von dem Sägeschnitt, mit dem eine großformatige Platte in einzelne Paneele aufgeteilt wird. Die schrägen Flanken 2.6 des Steges 2 bilden sich am Produkt ab.

Mit einem erfindungsgemäß ausgestalteten Pressblech wurde wie folgt gearbeitet:

### Ausführungsbeispiel 1:

In ein glattes, verchromtes Laborblech (Format: 650 x 500 mm) als Grundkörper 1 wurden im Abstand von 200 mm zunächst zwei Nuten 4 mit einer Breite > 20 mm und einer Tiefe von < 1 mm gefräst in die dann als Stege 2 zwei verchromte Metallstege eingesetzt und mit Hilfe eines Hochtemperatur stabilen Cyanacrylats mit dem Laborblech aus Stahl verklebt. Die Stege 2, 3 waren 2 cm breit und ragten 1 mm über die Oberseite 1 des Blechs hervor. Im Kantenbereich 2.1 waren sie einseitig abgerundet. Sie wurden mit der nichtabgerundeten Seite zum Grundkörper 1 verklebt. Nach dem Aushärten des Klebstoffs wurde das Pressblech als Oberblech in eine Laborpresse eingebaut. Dann wurden HDF-Platten (8 mm, Rohdichte: 850 kg/m³) mit Melaminharz imprägnierten Dekorpapieren auf der Oberseite und Gegenzug-Imprägnaten auf der Unterseite belegt und gemäß den unten stehenden Pressparameter verpresst. Nach dem Abkühlen wurde bei den beiden stegförmigen Vertiefungen in der Oberseite der HDF-Platten die Einpresstiefe bestimmt.

| | Strukturtiefe in mm | |
|---|---|---|
| Variante / Pressparameter | Aufgeklebte Stege aus verchromtem Stahl ( 1,0 mm Stärke ) | Aufgeklebte Stege aus verchromtem Aluminium ( 1,0 mm Stärke ) |
| p=70 bar, T=180°C, t=20 sec | 0,45 | 0,65 |
| p=70 bar, T=200°C, t=15 sec | 0,58 | 0,7 |
| p=70 bar, T=200°C, t=20 sec | 0,6 | 0,83 |

Wie der Tabelle entnehmbar ist, kann man durch Verwendung eines Metalls mit höherer Wärmeleitfähigkeit deutlich bessere Verformergebnisse erzielen. Dies bedeutet, dass man bei Verwendung eines Metalls mit besserer Wärmeleitfähigkeit entweder mit moderateren Pressparametern arbeiten kann oder die Stärke der aufgeklebten Stege 2, 3 reduzieren kann, um zum gleichen Verformergebnis zu kommen.

### Ausführungsbeispiel 2:

In ein unverchromtes, mit einer Holzstruktur versehenes Laborblech (Format: 650 x 500 x 5 mm) als Grundkörper 1 wurde ein Rahmen 3 mit einer Außenabmessung von 350 x 350 x 1 mm und einer Breite von 20 mm mittig eingefräst. Anschließend wurde ein Stahl- und ein Aluminiumrahmen 3, welcher vom Format in die Vertiefung 4 passte und eine Höhe von 2 mm hatte, in die Vertiefung mit Hilfe eines Hochtemperatur stabilen Cyanacrylat eingeklebt. Im unteren Kantenbereich 3.4 war der Rahmen 3 abgerundet, sodass nach dem Einkleben keine Höhendifferenz im Übergang zwischen Blech und Rahmen 3 feststellbar war. Nach dem Aushärten des Klebstoffs wurde das Pressblech jeweils als Oberblech in eine Laborpresse eingebaut. Dann wurden HDF-Platten (8 mm, Rohdichte: 850 kg/m³) mit Melaminharz imprägnierten Dekorpapieren auf der Oberseite und Gegenzug-Imprägnaten auf der Unterseite belegt und gemäß den unten stehenden Pressparameter verpresst. Nach dem Abkühlen wurde bei den beiden rahmenförmigen Vertiefungen in der Oberseite der HDF-Platten die Einpresstiefe bestimmt.

| | Strukturtiefe in mm | |
|---|---|---|
| Variante / Pressparameter | Eingeklebter Rahmen aus verchromtem Stahl ( 2,0 mm Stärke ) | Eingeklebter Rahmen aus verchromtem Aluminium ( 2,0 mm Stärke ) |
| p=70 bar, T=180°C, t=20 sec | 0,45 | 0,69 |
| p=70 bar, T=200°C, t=15 sec | 0,61 | 0,79 |
| p=70 bar, T=200°C, t=20 sec | 0,64 | 0,89 |

Wie der Vergleich zwischen Ausführungsbeispiel 1 und 2 zeigt, wird mit der etwas dickeren, in das Blech eingelegten Leiste aus Aluminium noch einmal ein besseres Ergebnis erreicht.

### Ausführungsbeispiel 3:

In ein unverchromtes, mit einer Holzstruktur versehenes Laborblech (Format: 650 x 500 x 5 mm) als Grundkörper 1 wurde ein Rahmen 3 mit einer Außenabmessung von 350 x 350 x 1 mm und einer Breite von 20 mm mittig eingefräst. Anschließend wurde ein verzinkter Aluminiumrahmen 3, welcher vom Format in die Vertiefung 4 passte und eine Höhe von 2 mm hatte, in die Vertiefung eingesetzt und mit dem Blech verlötet. Im oberen Kantenbereich 3.1 war der Rahmen 3 abgerundet, sodass nach dem Einsetzen keine Höhendifferenz im Übergang zwischen Blech und Rahmen 3 feststellbar war. Danach wurde das Pressblech verchromt. Dann wurde es als Oberblech in eine Laborpresse eingebaut. Anschließend wurden HDF-Platten (8 mm, Rohdichte: 850 kg/m³) mit Melaminharz imprägnierten Dekorpapieren auf der Oberseite und Gegenzug-Imprägnaten auf der Unterseite belegt und gemäß den unten stehenden Pressparameter verpresst. Nach dem Abkühlen wurde bei der rahmenförmigen Vertiefungen 4 in der Oberseite der HDF-Platten die Einpresstiefe bestimmt.

| | Strukturtiefe in mm |
|---|---|
| Variante / Pressparameter | Eingelöteter Rahmen aus verchromtem Aluminium ( 2,0 mm Stärke ) |
| p=70 bar, T=180°C, t=20 sec | 0,69 |
| p=70 bar, T=200°C, t=15 sec | 0,81 |
| p=70 bar, T=200°C, t=20 sec | 0,9 |

Wie der Vergleich zwischen Ausführungsbeispiel 2 und 3 zeigt, wird mit der eingeklebten bzw. eingelöteten Leiste aus Aluminium kein gravierender Unterschied bei der Strukturtiefe erreicht.

Je nach Bedarf können also auf- oder eingeklebte Stege 2, 3 verwendet werden, wobei der Prozess des Aufklebens vor der Verchromung stattfinden sollte. Besser können natürlich Stege 2, Rahmen 3 oder andere Geometrien, die z. B. Intarsien simulieren sollen, in ein eingefrästes Stahlblech eingesetzt und verlötet oder per "Lichtbogenfügen" verbunden werden. Damit können sogenannte "registered embossing" Strukturen erzeugt werden, die ansonsten nur schwierig bzw. mit hohen Kosten hergestellt werden können.

Dieses Blech mit den eingesetzten Stegen 2 bzw. Rahmen 3 kann dann insgesamt verchromt werden, wobei wenn nötig die einzusetzenden Metallstege, -rahmen 2, 3 usw. zunächst durch eine Vorbehandlung ( z. B. Verzinken, Eloxieren ) vorbereitet werden können. Als Metalle mit hoher Wärmeleitfähigkeit kommen Aluminium, Messing und Kupfer in Frage, wobei Kupfer wegen seiner mit Stahl vergleichbaren Wärmeausdehnung besser geeignet ist.

Je nach Bedarf kann bereits bei der Herstellung der Pressbleche Rücksicht auf die benötigten Stege 2 und/oder Rahmen 3 genommen werden. So kann z. B. bei der Strukturierung ( Ätzen ) des Pressblechs an den Stellen, wo sich später ein eingefräster Steg 2 und/oder Rahmen 3 befinden soll, auf die Strukturierung verzichtet werden. Diese können dann nach der Strukturierung und dem Fräsen eingefügt werden. Dabei ist von Vorteil, dass die Struktur des Blechs der des Stegs/Rahmens 2, 3 angepasst werden kann. Die Stege 2, 3 können eine Höhe von > 0,2 bis 5 mm ausgehend von der Höhe des Pressblechs haben. Natürlich können die Stege 2, Rahmen 3 oder andere Geometrien auch durch einen 3D-Druck im Blech erzeugt werden.

Derartige Pressbleche können insbesondere für Sonderprodukte verwendet werden. Es kann sich dabei z. B. um Bleche handeln, die für die Herstellung von Laminatböden eingesetzt werden, die im Verbindungsbereich eine sogenannte gepresste Fuge bzw. eine angedeutete Fuge für ein Fliesendekor haben sollen. Zusätzlich können natürlich auch die eingesetzten Stege 2, Rahmen 3 usw. eine andere Strukturierung aufweisen als der Rest des Bleches. Dieses kann z. B. eine Holzstruktur haben, wohingegen das eingelegte Profil unstrukturiert sein könnte.

### Bezugszeichenliste

- 1: Grundkörper / Pressblech
- 1.1: Oberseite
- 1.2: Strukturierung

- 2: Stege / Rahmen
- 2.1: Kante / Kantenbereich
- 2.2: Oberseite
- 2.3: Strukturierung
- 2.4: Übergang
- 2.5: Bereich
- 2.6: Flanke

- 3: Stege / Rahmen
- 3.1: Kante / Kantenbereich
- 3.2: Oberseite
- 3.3: Strukturierung

- 4: Vertiefungen

## Patentansprüche

1. Pressblech zum Erzeugen tiefer Strukturen in plattenförmigen Produkten, insbesondere in Holzwerkstoffplatten oder aus harzbeschichteten Papieren bestehende Laminate, bestehend aus einem metallischen Grundkörper (1) mit streifenförmigen und/oder rahmenförmigen Stegen (2, 3), **dadurch gekennzeichnet, dass** die Stege in vorgesehenen Vertiefungen (4) in den Grundkörper (1) eingesetzt sind und eine höhere Wärmeleitfähigkeit aufweisen als der Grundkörper (1) und mit den Stegen (2, 3) die tiefen Strukturen erzeugt werden.

2. Pressblech nach Anspruch 1, **dadurch gekennzeichnet, dass** die Stege (2,3) mit dem Grundkörper (1) stoffschlüssig verbunden sind.

3. Pressblech nach Anspruch 1 oder 2, **dadurch gekennzeichnet, dass** die Stege (2, 3) mit dem Grundkörper (1) formschlüssig verbunden sind.

4. Pressblech nach einem der vorstehenden Ansprüche, **dadurch gekennzeichnet, dass** der Grundkörper (1) und die Stege (2, 3) verchromt sind.

5. Pressblech nach einem der vorstehenden Ansprüche, **dadurch gekennzeichnet, dass** die von dem Grundkörper (1) wegweisenden Kanten (2.1, 3.1) der Stege (2, 3) abgerundet sind.

6. Pressblech nach einem der vorstehenden Ansprüche, **dadurch gekennzeichnet, dass** die Stege (2, 3) aus einer Stahllegierung bestehen.

7. Pressblech nach einem der Ansprüche 1 bis 5, **dadurch gekennzeichnet, dass** die Stege (2, 3) aus einer Aluminiumlegierung bestehen.

8. Pressblech nach einem der Ansprüche 1 bis 5, **dadurch gekennzeichnet, dass** die Stege (2, 3) aus einer Kupferlegierung bestehen.

9. Pressblech nach einem der Ansprüche 1 bis 5, **dadurch gekennzeichnet, dass** die die Stege (2, 3) aus einer Messinglegierung bestehen.

10. Pressblech nach einem der vorstehenden Ansprüche, **dadurch gekennzeichnet, dass** das Pressblech verchromt ist.

11. Pressblech nach einem der vorstehenden Ansprüche, **dadurch gekennzeichnet, dass** die Oberseite (2.2, 3.2) der Stege (2, 3) eine Strukturierung (2.3, 3.3) aufweist.

12. Pressblech nach einem der vorstehenden Ansprüche, **dadurch gekennzeichnet, dass** die Oberseite (1.1) des Grundkörpers (1) eine Strukturierung (1.2) aufweist.

13. Pressblech nach Ansprüchen 11 und 12, **dadurch gekennzeichnet, dass** die Strukturierung (1.2) des Grundkörpers (1) von der Strukturierung (2.3, 3.3) der Stege (2, 3) abweicht.

14. Pressblech nach einem der vorstehenden Ansprüche, **dadurch gekennzeichnet, dass** die Stege (2, 3) eine Höhe (H) von bis zu 5 mm aufweisen.

15. Pressblech nach Anspruch 5 oder 6, **dadurch gekennzeichnet, dass** die Stege (2, 3) mit dem Grundkörper (1) verschweißt, verlötet oder verklebt sind.

16. Pressblech nach Anspruch 5, **dadurch gekennzeichnet, dass** die Stege (2, 3) in einem 3D-Druck-Verfahren erzeugt werden.

## Claims

1. A press plate for creating deep structures in panel-like products, in particular in wood-based boards or laminates made of resin-coated papers, composed of a metallic base body (1) with strip-shaped and/or frame-like webs (2, 3), **characterized in that** the webs are inserted in depressions (4) provided in the base body (1) and have a higher thermal conductivity than the base body (1), wherein the deep structures are created by the webs (2, 3).

2. The press plate according to claim 1, **characterized in that** the webs (2, 3) are integrally bonded with the base body (1).

3. The press plate according to claim 1 or 2, **characterized in that** the webs (2, 3) are positively bonded with the base body (1).

4. The press plate according to one of the preceding claims, **characterized in that** the base body (1) and the webs (2, 3) are chrome-plated.

5. The press plate according to one of the preceding claims, **characterized in that** the edges (2.1, 3.1) of the webs (2, 3) facing away from the base body (1) are rounded.

6. The press plate according to one of the preceding claims, **characterized in that** the webs (2, 3) are made of a steel alloy.

7. The press plate according to one of the claims 1 to 5, **characterized in that** the webs (2, 3) are made of an aluminium alloy.

8. The press plate according to one of the claims 1 to 5, **characterized in that** the webs (2, 3) are made of a copper alloy.

9. The press plate according to one of the claims 1 to 5, **characterized in that** the webs (2, 3) are made of a brass alloy.

10. The press plate according to one of the preceding claims, **characterized in that** the press plate is chrome-plated.

11. The press plate according to one of the preceding claims, **characterized in that** the upper side (2.2, 3.2) of the webs (2, 3) features a structuring (2.3, 3.3).

12. The press plate according to one of the preceding claims, **characterized in that** the upper side (1.1) of the base body (1) features a structuring (1.2).

13. The press plate according to claims 11 and 12, **characterized in that** the structuring (1.2) of the base body (1) deviates from the structuring (2.3, 3.3) of the webs (2.3).

14. The press plate according to one of the preceding claims, **characterized in that** the webs (2, 3) have a height (H) of up to 5 mm.

15. The press plate according to claim 5 or 6, **characterized in that** the webs (2, 3) are welded, soldered or glued to the base body (1).

16. The press plate according to claim 5, **characterized in that** the webs (2, 3) are created in a 3D printing process.

## Revendications

1. Tôle de pressage pour réaliser des structures profondes dans des produits en forme de panneaux, en particulier dans des panneaux en matériau à base de bois ou dans des stratifiés constitués de papiers revêtus de résine, constituée d'un corps de base métallique (1) ayant des barrettes (2, 3) en forme de bande et/ou de cadre,
**caractérisée en ce que**
les barrettes sont insérées dans des creux (4) prévus dans le corps de base et présentent une conductivité thermique supérieure à celle du corps de base (1), et les structures profondes sont réalisées par les barrettes (2, 3).

2. Tôle de pressage selon la revendication 1,
**caractérisée en ce que** les barrettes (2, 3) sont reliées au corps de base (1) par une liaison de matière.

3. Tôle de pressage selon la revendication 1 ou 2,
**caractérisée en ce que** les barrettes (2, 3) sont reliées au corps de base (1) par complémentarité de forme.

4. Tôle de pressage selon l'une des revendications précédentes,
**caractérisée en ce que** le corps de base (1) et les barrettes (2, 3) sont chromés.

5. Tôle de pressage selon l'une des revendications précédentes,
**caractérisée en ce que** les bords (2.1, 3.1) des barrettes (2, 3) détournés du corps de base (1) sont arrondis.

6. Tôle de pressage selon l'une des revendications précédentes,
**caractérisée en ce que** les barrettes (2, 3) sont constituées d'un alliage d'acier.

7. Tôle de pressage selon l'une des revendications 1 à 5,
**caractérisée en ce que** les barrettes (2, 3) sont constituées d'un alliage d'aluminium.

8. Tôle de pressage selon l'une des revendications 1 à 5,
**caractérisée en ce que** les barrettes (2, 3) sont constituées d'un alliage de cuivre.

9. Tôle de pressage selon l'une des revendications 1 à 5,
**caractérisée en ce que** les barrettes (2, 3) sont constituées d'un alliage de laiton.

10. Tôle de pressage selon l'une des revendications précédentes, **caractérisée en ce que** la tôle de pressage est chromée.

11. Tôle de pressage selon l'une des revendications précédentes, **caractérisée en ce que** la face supérieure (2.2, 3.2) des barrettes (2, 3) présente une structuration (2.3, 3.3).

12. Tôle de pressage selon l'une des revendications précédentes, **caractérisée en ce que** la face supérieure (1.1) du corps de base (1) présente une structuration (1.2).

13. Tôle de pressage selon les revendications 11 et 12,
**caractérisée en ce que** la structuration (1.2) du corps de base (1) diffère de la structuration (2.3, 3.3) des barrettes (2, 3).

14. Tôle de pressage selon l'une des revendications précédentes, **caractérisée en ce que** les barrettes (2, 3) présentent une hauteur (H) allant jusqu'à 5 mm.

15. Tôle de pressage selon la revendication 5 ou 6,
**caractérisée en ce que** les barrettes (2, 3) sont soudées, brasées ou collées au corps de base (1).

16. Tôle de pressage selon la revendication 5,
**caractérisée en ce que** les barrettes (2, 3) sont réalisées par un procédé d'impression 3D.
